Europäisches Patentamt

**European Patent Office**

Office européen des brevets

(19)

(11) Publication number: **0 086 642**
A2

# (12) EUROPEAN PATENT APPLICATION

(21) Application number: **83300702.4**

(22) Date of filing: **11.02.83**

(51) Int. Cl.³: **B 01 D 35/22,** B 01 D 29/30

(30) Priority: **12.02.82 GB 8204215**
**30.04.82 GB 8212614**

(43) Date of publication of application: **24.08.83**
**Bulletin 83/34**

(84) Designated Contracting States: **AT BE CH DE FR IT LI LU NL SE**

(71) Applicant: **Goddard, James Edwin, 69 Pinner View, Harrow Middelesex (GB)**
Applicant: **Small, Stuart Hopton, Hjorung Veien 9, Oslo 3 (NO)**

(72) Inventor: **Goddard, James Edwin, 69 Pinner View, Harrow Middelesex (GB)**
Inventor: **Small, Stuart Hopton, Hjorung Veien 9, Oslo 3 (NO)**

(74) Representative: **Perry, Robert Edward et al, GILL JENNINGS & EVERY 53-64 Chancery Lane, London WC2A 1HN (GB)**

(54) **Filtration method and apparatus.**

(57) A method for filtering a fluid medium containing solids, in a filtration zone having a filter, comprises maintaining a pressure difference across the filter, thereby obtaining a fluid filtrate, and introducing into the filtration zone a second fluid which is substantially immiscible with, and has a density different from, the fluid medium, in which the filtration zone is closed and in which the method is operated under conditions such that solids are maintained in suspension substantially throughout the filtration zone.

The method may be conducted by introducing the fluid medium into a duct 1 having a filter 2, removing the filtrate through a transport line 3, e.g. under the influence of a vacuum pump 6. The second fluid is air introduced via a Venturi pump 7.

ACTORUM AG

FILTRATION METHOD AND APPARATUS

The present invention relates to a method and apparatus for filtration.

The process of filtration separates materials in a fluid medium into a filtrate which can pass through a filter, often under the influence of a pressure difference applied across the filter, and a residue to which the filter is impermeable. In the process, residue can build up on the filter, and eventually, stop filtration.

Known filter media include cloths, wire mesh and beds of particulate material such as sand. Filtration residue may be removed from filters by mechanical means, but this is expensive and time-consuming, since filtration may have to be interrupted for removal. Particularly for filter beds, cleaning of the material may be achieved by back-washing, again involving interruption of the process.

Rather than remove filtration residue from a filter after residue has built up, the build-up itself may be prevented by, for example, the procedure disclosed in US Patent Specification No. 3,974,068 where laminar flow of a liquid containing micro-organisms, macro-molecules or finely-divided solids is maintained at a filter surface, and forced transverse movement of particulate matter in the liquid, into the filter, is achieved by using a static pressure head. It is also known, e.g. as disclosed in British Patent Specifications Nos. 1,468,928 and 1,492,090, and in DOS 25 33 151, to use downward or horizontal flow of a fluid medium parallel to a filter surface through which filtrate passes.

British Patent Specification No. 1,487,251 discloses a method and apparatus for the filtration of untreated sewage. The illustrated apparatus comprises a cylindrical filter disposed in a tank, with baffles, on each side of the filter, which define narrow channels. Air is bubbled up each of these channels under conditions such that the filter oscillates. The air flow creates an oscillating pressure difference across the filter and provides an upward flow of sewage containing unfiltered particles on the outside, and an upward flow of liquid containing filtered particles on the inside, of the filter. Since the bubble concentration must be low, in order to give the filter-shaking effect, the upward flow of liquid parallel to the filter surface must itself be low. Particles on both sides of the filter are in a sedimentation zone, and it is proposed that sedimented solids should be passed to an aeration tank.

It is of course generally the case that sewage is treated in a series of stages which include aeration and sedimentation. For large volumes of sewage, sedimentation zones must be large and, in order to maintain quiescent conditions necessary for sedimentation, through-put is low.

British Patent Specification No. 2,053,885 discloses the aeration of waste in a closed tank, waste being drawn into the tank and air pulled through the waste under the influence of a vacuum pump.

According to a first aspect of the present invention, a method for filtering a fluid medium containing suspended solids, in a filtration zone having a filter, comprises maintaining a pressure difference across the filter, thereby obtaining a fluid filtrate, and introducing into the filtration zone a second fluid which is substantially immiscible with, and has a density different from, the fluid medium, in which the filtration zone is closed and in which the method is operated under conditions such that solids are maintained in suspension substantially throughout the filtration zone.

The method of the invention differs from the method disclosed in British Patent Specification No. 1,487,251 in that sedimentation is actively prevented, and in that the solids in the medium to be filtered are substantially prevented from coming into contact with the filter, rather than being removed from the filter by its oscillation. The present invention therefore allows a greater variety of filters to be used, which can be stronger.

The invention may involve the use of two gaseous or two liquid (e.g. in solvent extraction) fluids, provided that these fluids are substantially immiscible and have different densities. Conveniently, either or both fluids are introduced so as to cause sufficient turbulence in the filtration zone that the solids are maintained in suspension, and the given criteria are necessary in order to ensure that the second fluid is not merely entrained in the filtrate flow (although this may occur to a minor degree). However, it is usually preferred that one fluid should be a liquid and the other a gas, under the operating conditions.

The filtration zone is closed, by which we mean that the fluids can (and do) flow freely within that zone but are not in open circulation with a quiescent or sedimentation zone. The filtration zone may be defined by a tank which may have inlets for untreated fluids and an outlet for solids (any or all of which may be controlled by valves), in addition to the necessary filtrate outlet. The zone may be within a duct of the type described below.

Within the filtration zone, the solids concentra-ation increases gradually but turbulence within the zone prevents filter blockage. The method can be operated at high solids concentrations in the filtration zone, from which a concentrated, say, slurry, can be removed as desired.

The invention ensures intimate mixing of the fluids throughout the filtration zone, and it is therefore suitable for use where it is desired to cause reaction, e.g. between impurities in the fluid medium and the second fluid, and separation of solids by filtration, in one stage. Solids may only be present as a consequence of the reaction, but the method is particularly suited to the removal of solids originally present in the fluid medium, although the nature of those solids may be changed by reaction. The filter material may catalyse or be involved in such reaction.

In one example of the use of the invention, a gas may be introduced into a liquid in order to dissolve solids therein, unreacted solids then being maintained in suspension in the filtration zone and the desired solution being removed. An inert gas can be used in potentially hazardous conditions; nitrogen may be used to scrub gasolene in this way. Alternatively, a gas containing dust or other particles may be scrubbed with a suitable liquid. Air may be conditioned/humidified.

For convenience, the invention will be illustrated below with reference to the treatment of a liquid medium containing solid impurities requiring oxidation, in which the second fluid is an oxygen-containing gas which, again for the purposes of illustration, is air.

In a first embodiment (herein defined as "counter-current"), the invention is conducted by passing the liquid downwardly, and air upwardly, through a filter. The air bubbles up through the filter and the liquid, preventing solids from blocking the filter, causing oxidation and maintaining the oxidised solids in suspension. Liquid flow through the filter should not be so great, relative to the air input, that air is entrained in the filter and does not pass up through the filter.

In a second embodiment (herein defined as "orthogonal flow"), the invention is conducted by introducing air in the vicinity of the filter and causing liquid flow parallel to the filter at a rate greater than the liquid flow through the filter. The air input may itself cause the flow parallel to the filter, which effectively "scours" the filter. In both embodiments, the substantial immiscibility, and different densities, of the liquid, e.g. water, and air ensure that the different general flow directions can be maintained.

The material and construction of the filter, the

6

pressure difference across the filter, and the flow rates will be chosen having regard to, _inter_ _alia_, the nature of the liquid input and the quality required of the filtrate. All these factors may be conventional.

In the counter-current embodiment, the filter may be a screen or a bed of particulate material, e.g. gravel, sand, dolomite or carbon in one or more layers, e.g. on a screen. The air inlet may be into the bed. In the orthogonal flow embodiment, where it is again convenient that the air flow should be upwards, and where the scouring flow rate will often be higher than the air flow rate in the counter-current embodiment, a rigid filter is suitable.

In the counter-current embodiment, the filtration zone may be a duct having a filter bed therewithin. In the orthogonal flow embodiment, it is convenient to channel the scouring flow along a substantially linear path across the face of the filter which is therefore suitably mounted in the wall of a duct. The duct may be of any cross-section but this is suitably circular. The wall in which the filter is mounted may be external or internal. In, say, a cylindrical duct, the filter may be a tubular filter through which filtrate is drawn outwardly, with respect to the scouring flow which itself passes along the axis of the cylinder. Alternatively, the filter may be a tubular or candle filter mounted within a cylindrical duct, thereby forming an internal wall through which filtrate is drawn inwardly with respect to the scouring flow.

According to a second aspect of the present

7

invention, filtration apparatus comprises a duct; a
filter in the duct; a filtrate transport pipe directly
connected to the downstream face of the filter; a
secondard fluid inlet through which fluid can pass into
the duct in the vicinity of the filter; and means for
maintaining a pressure difference across the filter.

One or more such apparatus may be placed in a
tank which constitutes the closed filtration zone, with
the or each filtrate pipe leading outside the tank.
Liquid may be circulated, and solids maintained in
suspension, in the tank by causing the liquid to pass
upwardly through the duct in the orthogonal flow embodiment.  In either embodiment, impure liquid can be
introduced into the tank, and concentrated suspended
solids removed, intermittently or continuously, from the
tank.  Intermittent removal is preferred where some
residence time within the tank is desirable.  Removal
may be through a valved outlet or by decantation as the
liquid in the filtration zone rises to the level of a
suitable outlet.  Thus, the filtration zone may be in
connection with a quiescent zone, in certain circumstances, but there is no inter-circulation.

The pressure difference across the filter may
simply be a hydraulic effect.  In the counter-current
therefore, for example, liquid may be allowed to flow
downwardly, and air to bubble upwardly, through the
filter; no moving parts are required.  In the orthogonal
flow embodiment, for example, the liquid may be introduced
under pressure and the filtrate removed at ambient
pressure, e.g. through a line opening into the atmosphere.
The filtrate may be removed positively, e.g. under the
influence of the applied pressure, or it may be allowed
to flow along a transport line.  If the filter is at a
certain depth in a body of liquid, e.g. in a tank, and
the line extends out of the tank below the surface level

8

of the liquid, the resultant hydraulic head may be sufficient. Air may be introduced under pressure and thereby cause the scouring flow; in this case, the closed filtration zone may have an air bleed outlet.

The scouring flow may be caused by pumping the liquid parallel to the filter, e.g. along a duct of the type described. For example, the liquid may be circulated past the filter using a pump which draws in air, e.g. a Venturi pump. Scouring flow may also be caused by introducing air under pressure, or by causing it to flow through the liquid under the influence of vacuum.

The scouring flow rate, in order to achieve the desired effect, may be, for example, a factor of at least 4, preferably at least 8, and in practice 100 to 10000, e.g. 250 to 5000, times that of the filtration rate, calculated in terms of a planar filter, a scouring flow substantially parallel to the filter plane, and a substantially orthogonal filtration flow.

It is often preferred that the pressure difference across the filter should be caused by operation with the liquid medium at ambient pressure, the filtrate being drawn off under reduced pressure, e.g. under the influence of a vacuum pump. Apparatus of the invention can be provided for operation in this manner, and the means for causing a pressure difference may then simply comprise a vacuum pump connected to the filtrate transport line.

Scouring flow can be achieved, and a gas introduced, under the influence of reduced pressure maintained above the body of the liquid medium. A vacuum pump may be used for this purpose, either separate from, or linked with, a vacuum pump intended for the purpose of removing filtrate. A proportion of the gas entrained in the scouring flow may pass through the filter together with the filtrate, but this may be of advantage, particularly where it is desired to draw the filtrate through a filtrate transport line to a height which a column of liquid alone could not reach under the influence of the pressure difference.

Filtrate may be drawn off through a transport line under the influence of reduced pressure and, if desired, discharged _via_ a hydraulic leg. The height of the leg may depend on the depth below the surface of a body of liquid at which the filtrate is removed from a filter immersed in such a body of liquid. This dependence is parallel to the dependence of the hydraulic head, discussed above, on the depth at which filtrate is removed below the surface of a body of liquid. The pressure head/hydraulic leg can be used as an indication of, and as a means of controlling, the level of the body of liquid. As a result, liquid input can be controlled, e.g. in order to ensure that a duct in a tank is covered and/or that the tank capacity is not exceeded.

The invention can be used in the treatment of raw potable water or treated or untreated sewage. Since the flow rates can be high, with consequent high turbulence in the filtration zone, the orthogonal flow embodiment is particularly suited for use with high solids concentrations.

It is of value in the treatment of raw sewage where a high degree of aeration is required. In this case, the invention provides aeration/filtration in one step. It has generally been considered more difficult to filter activated sludge than untreated sewage, but no particular problem is observed in operation of the invention. The sludge which is obtained can be as concentrated as that obtained in a conventional sedimentation tank, but using considerably smaller apparatus. Alternatively, a number of apparatus units according to the invention can be placed in a conventional sedimentation tank (which has a solids concentration limit), and thereby greatly increase its through-put, without requiring a separate aeration stage. The modified tank can act as a sludge thickener and/or clarifier; clarification is substantially independent of the solids sedimentation rate.

The counter-current embodiment is more suited to the tertiary treatment or polishing of sewage or potable water. The flow rates may be relatively low, especially at the edges of a filter bed, but this allows, say, flocculation within the bed, aeration and then flotation above the bed.

Apparatus of the invention may be used to replace, modify or complement existing water treatment units. It may be used to treat a side-stream of an existing plant.

11

An orthogonal flow water treatment unit of the invention is of particular utility in apparatus of the type described in British Patent Specification No. 2,053,885A. The known apparatus comprises a tank into which waste may be drawn under the influence of reduced pressure caused by a vacuum pump working against an air leak into the tank. The air leak causes satisfactory aerobic degradation of waste in the tank. The known apparatus may be modified in terms of the present invention by forming the air inlet as a substantially vertically mounted duct of the type described herein, at the end of an air line which may lead into the duct below or above the filter. Operation of a first vacuum pump causes material to pass into the tank and air to bubble into the duct, causing a scouring flow. The scouring flow includes a high proportion of entrained air if the air line enters the duct below the filter. A second vacuum pump causes the necessary pressure difference across the filter and transport of the filtrate along the filtrate transport line.

In addition to providing aeration and, effectively, sedimentation of sewage within a single tank, the invention can readily be adapted to chemical or other treatment of the sewage, in situ. Owing to the mixing effect which is caused, and since the method can operate with a wide range of solids concentrations, coagulants and other materials can satisfactorily be added, although conventional additives may equally well be rendered unnecessary.

For example, phosphate in waste can be converted into a form in which it can be readily separated with suspended solids, by adding to the liquid a material which reacts with the phosphate to give a relatively water-insoluble phosphate compound, and an inert particulate material which adsorbs the water-insoluble phosphate. An example of a relatively water-insoluble phosphate is aluminium phosphate, and the reactant is therefore suitably an aluminium ion source, e.g. from an ion-exchange resin or by use of an aluminium salt. Alum may be used, to generate aluminium hydroxide in situ, but it is often preferred to add aluminium hydroxide as such. The reactant can be a compound which is only partially water-soluble but which, under the agitated conditions in the filtration zone, and on displacement of equilibrium by reaction, slowly releases its active principle into the system.

The adsorbent may be, for example, soil (which gives a digested humus product) or chalk (which provides a degree of pH control). The nature of the adsorbent is not critical, within the given criteria. At the simplest level, the addition of soil to sewage waste pulls out suspended sewage solids, giving a product which can simply be drained and pumped.

If desired, the adsorbent may be added in the form of an agglomerate which is broken up by attrition, in use. An alternative means of introducing adsorbent material into the system is as the result of maceration of nondegradable material which is introduced with the sewage input, e.g. toilet tissue. A filter bed may provide adsorbent material.

13

The invention will now be described by way of example with reference to the accompanying drawings which are all schematic views of apparatus for use in the invention.

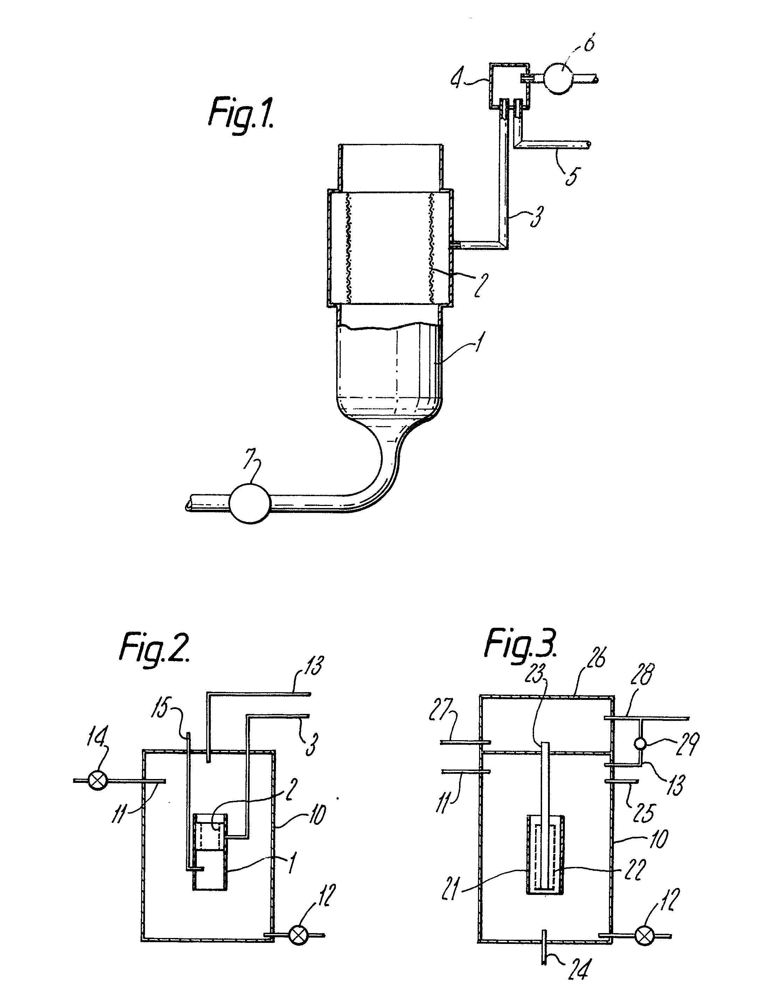

Figure 1 shows a duct 1 having a tubular filter 2 mounted in the wall thereof. The filter 2 is in connection with a filtrate transport line 3 along which filtrate can be caused to flow into a tank 4, and thence through an outlet pipe 5, under the influence of a vacuum pump 6. Flow through the duct 1 can be achieved by operation of a Venturi pump 7.

In use of the apparatus illustrated in Figure 1, liquid is caused to flow upwardly along the duct 1 by operation of pump 7 at a velocity substantially greater than the filtration velocity achieved by operation of the vacuum pump 6. Solids or other materials which cannot pass through the filter 2 are prevented from building up on the filter. Medium which passes out of the top of the duct may be recirculated through the pump 7. Such apparatus, comprising a plurality of ducts if desired, may be introduced into a conventional sedimentation tank to increase throughput.

Figure 2 shows, as does Figure 1, a duct 1, a filter 2, and a filtrate transport line 3. The filtrate transport line leads to a vacuum pump (not shown). The duct 1 is mounted in a closed tank 10 having an inlet 11, an outlet with a desludge valve 12 and a line 13 connected to a vacuum pump (not shown). The inlet 11 is illustrated as having a one-way valve 14 which may be, for example, the flushing mechanism on a lavatory. The

14

illustrated apparatus further comprises an air line 15, open to the atmosphere at one end and leading into the duct 1 at the other end.

In use of the apparatus illustrated in Figure 2, the vacuum pumps are operated continuously. If desired, one vacuum pump may be used in association with means which provide different degrees of reduced pressure above the liquid and in the duct. Liquid enters the tank 10 through the inlet 11 when the valve 14 is open, and air enters the tank through the line 15, under the influence of the vacuum drawn through line 13. Waste in the tank is aerated by the air flow which also causes a flow of air/liquid upwardly through the duct 1. Filtrate is drawn off through the transport line 3, and the filter is effectively scoured and the build-up of solids thereon prevented, if the flow up the duct 1 has a velocity substantially greater than the filtration velocity across the filter 2. As and when desired, solids are removed through the desludge valve 12, without it being necessary to interrupt operation.

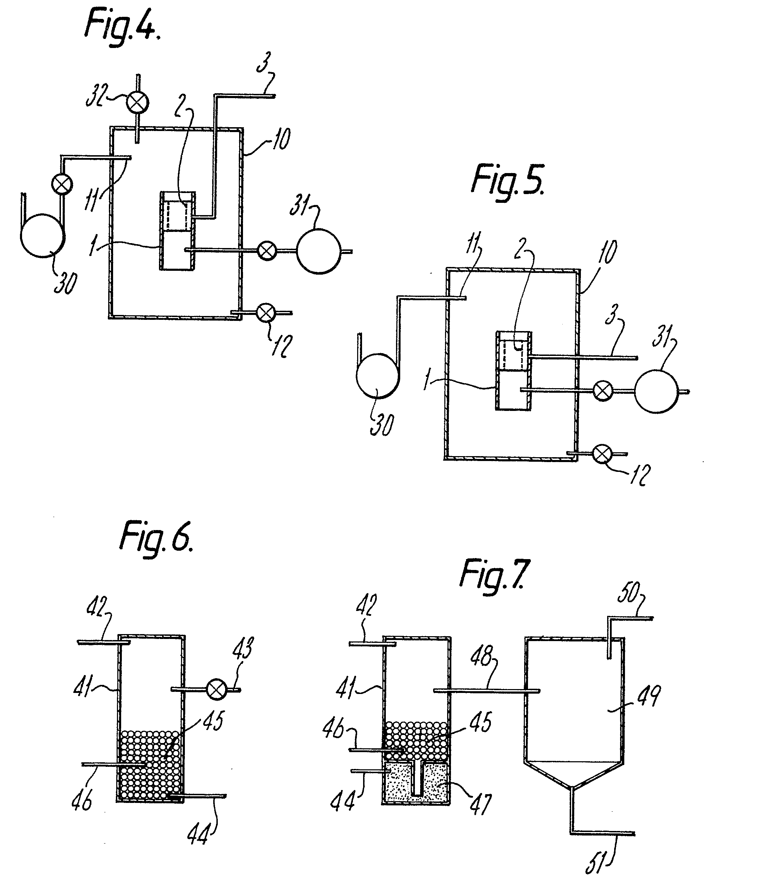

Figure 3 illustrates apparatus comprising a duct 21 within which is a candle filter 22 from which a filtrate transport line 23 leads upwardly. As in the apparatus of Figure 2, the duct is mounted in a closed tank 10 having an inlet 11, an outlet with desludge valve 12 and a line 13 connected to a vacuum pump (not shown). In addition, the tank 10 includes an air leak 24 positioned beneath the duct 21 and an inlet 25 for the dosage of, for example, coagulant chemicals.

The apparatus illustrated in Figure 3 further comprises a filtrate transport chamber 26 with an outle 27 and a line 28 leading to the vacuum pump. There is a constriction 29 in the line 13.

In operation of the apparatus illustrated in Figure 3, continuous operation of the vacuum pump causes a vacuum to be drawn in each of tank 10 and chamber 26, but the vacuum is harder in the latter owing to the effect of the constriction 29 in the line 13. Liquid and air enter the tank 10 through inlets 11 and 24, respectively, under the influence of the reduced pressure in the tank. Liquid circulates through the duct 21, passing upwardly with an entrained flow of air bubbles. The liquid is filtered through the filter 22, and drawn up through the filtrate transport line 23 under the influence of the difference in pressure between the chamber 26 and the tank 10. The filtrate is then discharged through outlet 27, if desired through a hydraulic leg.

Figures 4 and 5 illustrate apparatus which can operate similarly to that shown in Figure 2, but in which the scouring flow is caused by over-pressure rather than vacuum. Figures 4 and 5 show a duct 1 having a filter 2, and a filtrate transport line 3, mounted in a tank 10 having a liquid inlet 11 and an outlet with a desludge valve 12. In addition, there are a liquid pump 30, a compressor 31 and, in the Figure 4 embodiment only, an air bleed outlet having a one-way valve 32. When liquid is pumped into the tank 10 by means of the pump 30, filtrate passes along the line 3 whose outlet is open to the atmosphere, under the influence of the hydraulic head. Scouring flow across the filter 2 is achieved by

16

pumping air through the compressor 31, while air which bubbles out of the body of the liquid, in the embodiment of Figure 4, is allowed to escape through the valve 32. The hydraulic head exists owing to the excess pressure at the depth below the liquid surface at which the filtrate is removed; it exists whether the tank 10 is closed (as illustrated in Figure 4) or open to the atmosphere (as illustrated in Figure 5).

Figures 1 to 5 illustrate apparatus for use in the orthogonal flow embodiment of the invention. Apparatus for use in the counter-current flow embodiment are illustrated in Figures 6 and 7.

Figure 6 shows a duct 41 having an inlet 42, a valved desludge outlet 43 and a filtrate outlet 44, and includes a bed 45 of particulate material. An air inlet 46 leads into the bed.

In use of the apparatus illustrated in Figure 6, liquid passes down, while air bubbles up from the inlet 46 through the bed 45. The rates of flow can be chosen so that solids are maintained in suspension above the bed 45, and periodically removed through outlet 43. The air flow may be modulated, if desired. The pressure difference causing liquid flow may be hydrostatic. Flow may be achieved by causing the air concentration in the liquid in the bed to be higher than above the bed. The duct may be immersed in a larger tank, in which case outlet 43 may include a pump, for recirculating increasingly concentrated solids into the tank. The inlet 42 and outlet 44 may simply be open ends to the duct 41, the filter bed being supported on a screen.

Figure 7 again shows duct 41, inlet 42, filtrate outlet 44, bed 45 and air inlet 46. An additional bed 47 of, say, silvered active carbon provides filtrate treatment. The duct is connected via a line 48 to a sedimentation tank 49 having a line 50 connected to a vacuum pump (not shown) and a sludge return line 51. The filter operates in a manner equivalent to that of Figure 6, air being pulled through the liquid under the influence of vacuum. Increasingly concentrated solids above the bed 45 are decanted into the tank 49.

CLAIMS

1. A method for filtering a fluid medium containing solids, in a filtration zone having a filter, which comprises maintaining a pressure difference across the filter, thereby obtaining a fluid filtrate, and introducing into the filtration zone a second fluid which is substantially immiscible with, and has a density different from, the fluid medium, in which the filtration zone is closed and in which the method is operated under conditions such that solids are maintained in suspension substantially throughout the filtration zone.

2. A method according to claim 1, in which the first fluid is a liquid and the second fluid is a gas.

3. A method according to claim 2, in which the first fluid is sewage and the gas is air.

4. A method according to any preceding claim, in which the first fluid is passed downwardly, and the second fluid upwardly, through a filter.

5. A method according to claim 4, in which the filter is a bed of particulate material.

6. A method according to any of claims 1 to 3, in which the second fluid is introduced in the vicinity of the filter and the first fluid is caused to flow parallel to the filter at a rate greater than the flow of the first fluid through the filter.

7. A method according to claim 6, in which the filter is disposed substantially vertically and the second fluid flows upwardly.

8. Filtration apparatus which comprises a duct; a filter in the duct; a filtrate transport pipe directly connected to the downstream face of the filter; a

0086642

secondary fluid inlet through which fluid can pass into the duct in the vicinity of the filter; and means for maintaining a pressure difference across the filter.

9. Apparatus according to claim 8, in which the means for causing a pressure difference across the filter is a vacuum pump.

10. Apparatus according to claim 8 or claim 9, which additionally comprises means for introducing a secondary fluid through the secondary fluid inlet and parallel to the filter.

11. Apparatus according to any of claims 8 to 10, in which the filter is mounted in an internal or external wall of the duct.

12. Apparatus according to claim 8, in which the filter comprises a bed of particulate material and the secondary fluid inlet is in the bed.

13. Apparatus according to any of claims 8 to 12, in which the duct is disposed substantially vertically within a tank and the filtrate transport pipe leads outside the tank.

0086642

1/2

Fig.1.

Fig.2.

Fig.3.

Fig.4.

Fig.5.

Fig.6.

Fig.7.